# FASCICULE DE BREVET EUROPEEN

(11) **EP 0 558 425 B1**
(45) Date de publication et mention de la délivrance du brevet: **16.04.1997**
(21) Numéro de dépôt: 93420058.5
(22) Date de dépôt: 10.02.1993
(51) Int. Cl.: B62M 25/08, B62M 9/12

(54) **Dispositifs permettant les changements de vitesses sur bicyclettes**
Geschwindigkeitssteuergerät für Fahrräder
Speed control apparatus for bicycles

(30) Priorité: 27.02.1992 FR 9202553
(43) Date de publication de la demande: 01.09.1993
(73) Titulaire: MAVIC S.A., 01990 Saint-Triviers sur Moignans (FR)
(72) Inventeur: Lacombe, Jean-Pierre, F-74650 Chavanod (FR); Mercat, Jean-Pierre, F-74960 Can-Gevrier (FR)
(74) Mandataire: Lejeune, Benoit

(56) Documents cités:
- EP-A- 0 148 781
- EP-A- 0 336 033
- WO-A-88/01962
- FR-A- 2 247 376
- FR-A- 2 471 908
- FR-A- 2 610 061
- US-A- 4 894 046

## Description

La présente invention concerne les dispositifs permettant les changements de vitesses pour les cycles du type à transmission par chaîne et pignons.

Sur les bicyclettes actuelles, les changements de vitesses se font grâce à un dispositif assurant le déplacement de la chaîne en prise avec un pignon, vers un autre pignon d'un diamètre différent, assurant ainsi une modification du rapport de transmission. Il est déjà connu des dispositifs de ce type appelés aussi dérailleurs, et qui comprennent un corps supérieur fixé au cadre de la bicyclette et un corps inférieur retenant la chaîne, qui est relié de façon mobile par rapport au corps supérieur par une structure en parallélogramme pouvant osciller transversalement pour déplacer latéralement la chaîne et permettre les différents changements de vitesses. La structure en parallélogramme étant constituée par un ensemble assez complexe de nombreuses biellettes pivotantes. Les mouvements du parallélogramme sont commandés par l'action d'un câble flexible métallique dont l'extrémité est reliée à un levier fixé sur le cadre de façon pivotante, que doit manoeuvrer le cycliste pour ainsi effectuer les différents changements de vitesses. De tels dispositifs sont par exemple décrits dans les demandes de brevet françaises, publiées sous les numéros 2 620 104, 2 637 249 et 2 639 313.

Ces dispositifs, bien que déjà perfectionnés, ne donnent pas entièrement satisfaction et présentent un certain nombre d'inconvénients. En effet, les dérailleurs actuellement commercialisés sont, et on le comprendra, d'un coût de fabrication élevé et d'une utilisation pas totalement fiable. De plus, le cycliste doit, dans la plupart des cas, lâcher son guidon pour agir sur le levier de changement de vitesses, ce qui est pour le moins peu idéal, surtout pour des cyclistes de compétition qui devraient n'avoir qu'à se concentrer sur leur pédalage et leur pilotage.

On connaît également d'après le brevet français publié sous le numéro FR 2 247 376 un dérailleur électrique comprenant un organe mobile de déraillement dont le déplacement est piloté par un moteur électrique entraînant un train d'engrenages réducteurs. Le circuit de commande de ce dérailleur comprend deux interrupteurs électriques couplés à un circuit délivrant au moteur des impulsions indexées. L'inconvénient de ce dérailleur est une grande inertie qui est dus à l'usage d'un réducteur derrière le moteur. Un autre inconvénient est que le moteur électrique présente une consommation électrique élevée.

La présente invention se propose de résoudre les différents inconvénients des dérailleurs de l'art antérieur et propose une nouvelle conception du dérailleur apportant une petite inertie un confort d'utilisation, une meilleure fiabilité, d'un poids et d'un coût moindres. Le dispositif selon l'invention permet par ailleurs le changement de vitesses avec un minimum d'énergie de commande. Ces objetifs sont obtenus par un dispositif possèdant toutes les caractéristiques de le première revendication

Des caractéristiques préférées de l'invention font l'objet de revendications dépendantes.

D'autres caractéristiques et avantages de l'invention se dégageront de la description qui va suivre en regard des dessins annexés qui ne sont donnés qu'à titre d'exemples non limitatifs.

Les figures 1 à 26 représentent un premier mode de réalisation selon lequel le dispositif de changement de vitesses est un dérailleur arrière.

La figure 1 est une vue latérale d'un vélo équipé du dispositif selon l'invention.

La figure 2 est une vue en perspective du dérailleur arrière selon l'invention.

La figure 3 est une vue latérale du dérailleur arrière selon l'invention.

La figure 4 est une vue en coupe partielle selon IV-IV de la figure 3.

Les figures 5 et 6 sont des vues en coupe selon V-V de la figure 3 illustrant deux positions différentes.

La figure 7 est une vue éclatée montrant des détails du dispositif selon l'invention.

La figure 8 est une vue en perspective schématique illustrant les moyens de transformation.

La figure 9 est une vue latérale illustrant le chemin de guidage.

La figure 10 est une vue montrant sous forme développée, le chemin de guidage.

La figure 11 est une vue partielle coupe selon XI-XI de la figure 3.

La figure 12 illustre le dispositif de commande dans une position escamotée de repos.

La figure 13 est une vue illustrant le dispositif de commande dans sa position active.

La figure 14 est une vue schématique montrant le circuit électrique de commande et d'indexation.

La figure 15 est une vue en perspective montrant un détail de réalisation.

La figure 16 est un diagramme illustrant les caractéristiques des ressors du dispositif d'indexation.

Les figures 17, 18 et 19 sont des vues illustrant sous forme de diagramme, les différentes actions respectivement des interrupteurs de commande, du solénoïde et du commutateur d'indexation. La figure 17 montre l'impulsion donnée par l'interrupteur de commande. La figure 18 représente l'alimentation du solénoïde correspondant, tandis que la figure 19 illustre l'action du commutateur d'indexation. Les diagrammes étant placés de sorte à avoir la même référence de temps.

Les figures 20 à 23 sont des vues similaires aux figures 5 et 6 montrant différentes positions de déraillement.

Les figures 24, 25 et 26 sont des vues extérieures arrières du dispositif de changement de vitesses dans les positions respectives des figures 20, 21, 22 et 23.

Les figures 27 à 29 illustrent une variante de réalisation.

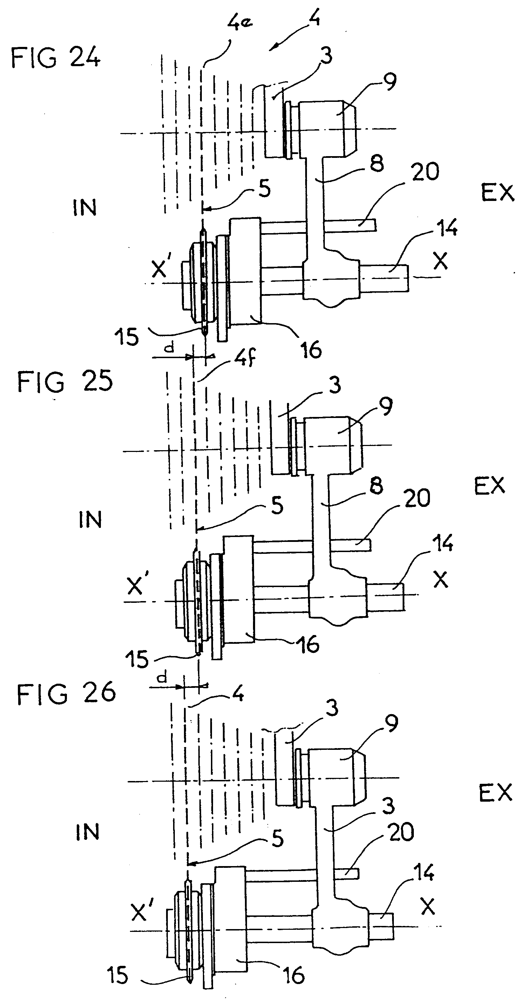

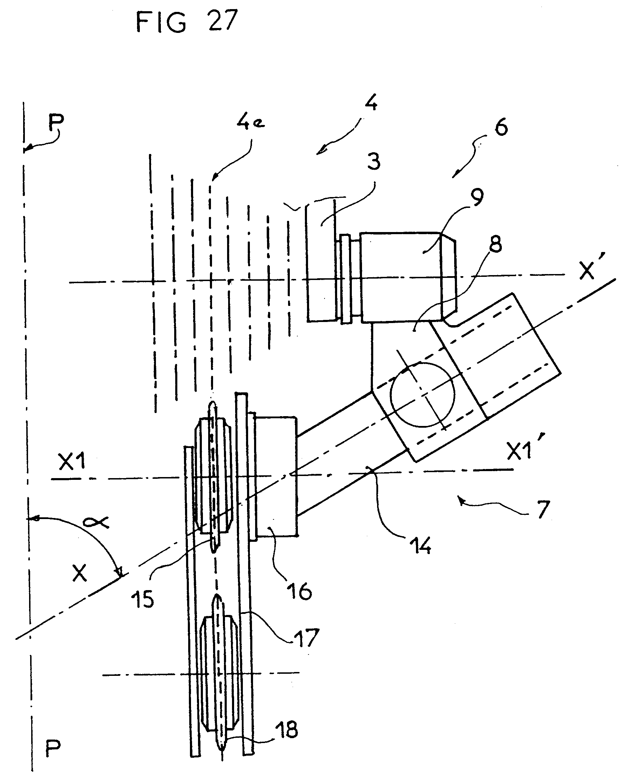

La figure 27 est une vue extérieure similaire à la figure 24.

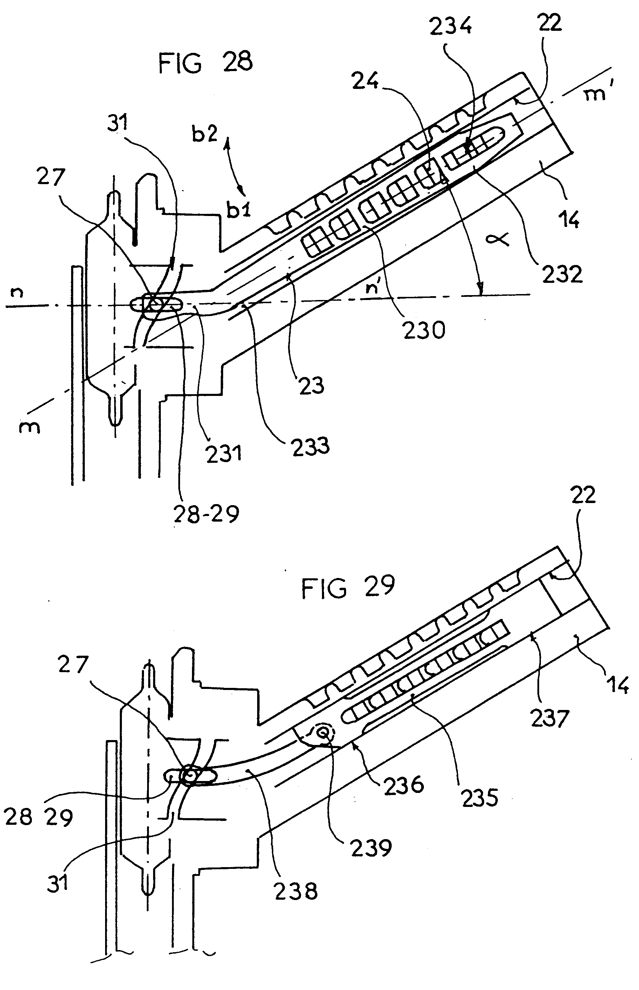

Les figures 28 et 29 sont des vues schématiques simplifiées illustrant deux modes d'exécution.

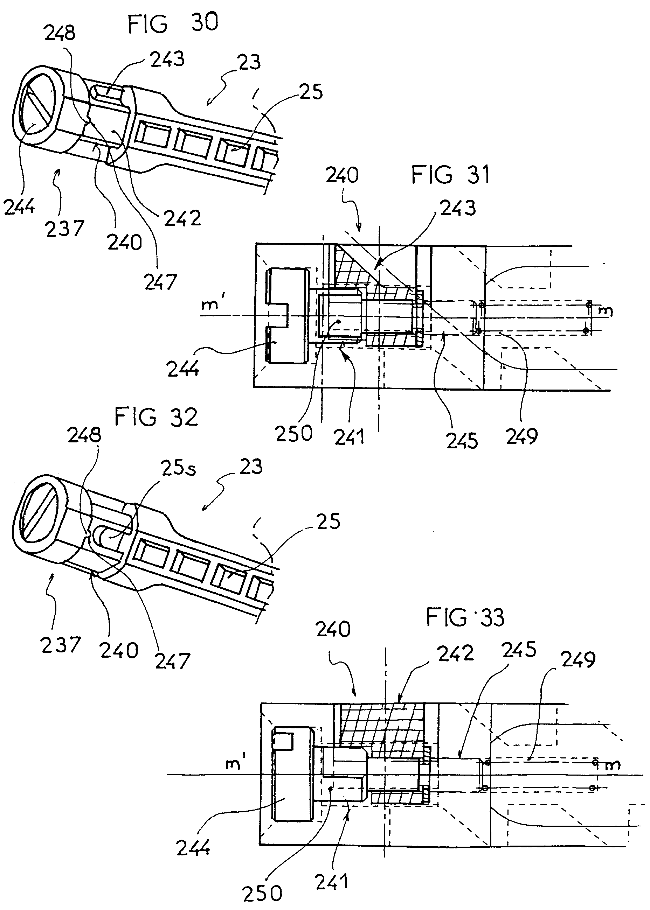

Les figures 30 à 33 représentent un perfectionnement.

La figure 30 est une vue en perspective montrant le perfectionnement dans sa position inactive.

La figure 31 est une vue partielle en coupe selon le plan T1 de la figure 30.

La figure 32 est une vue similaire à la figure 30 montrant le perfectionnement en position active.

La figure 33 est une vue partielle en coupe selon T1 de la figure 32.

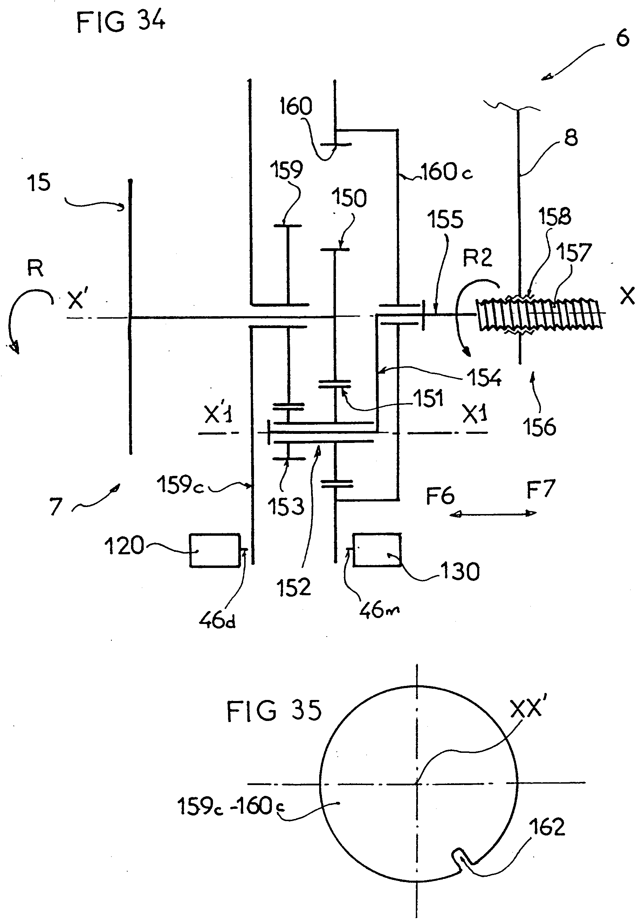

Les figures 34 et 35 illustrent une variante de réalisation.

La figure 34 est une vue schématique en coupe transversale.

La figure 35 montre un disque de commande vu selon son axe de rotation.

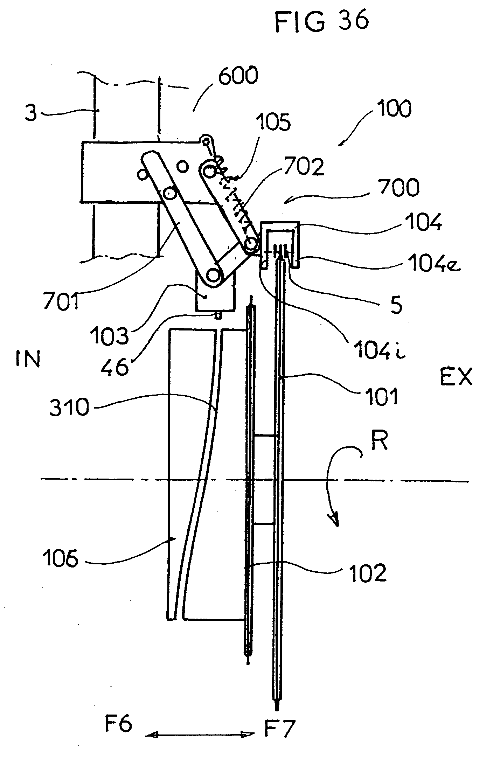

La figure 36 représente de façon schématique un autre mode d'exécution du dispositif selon l'invention.

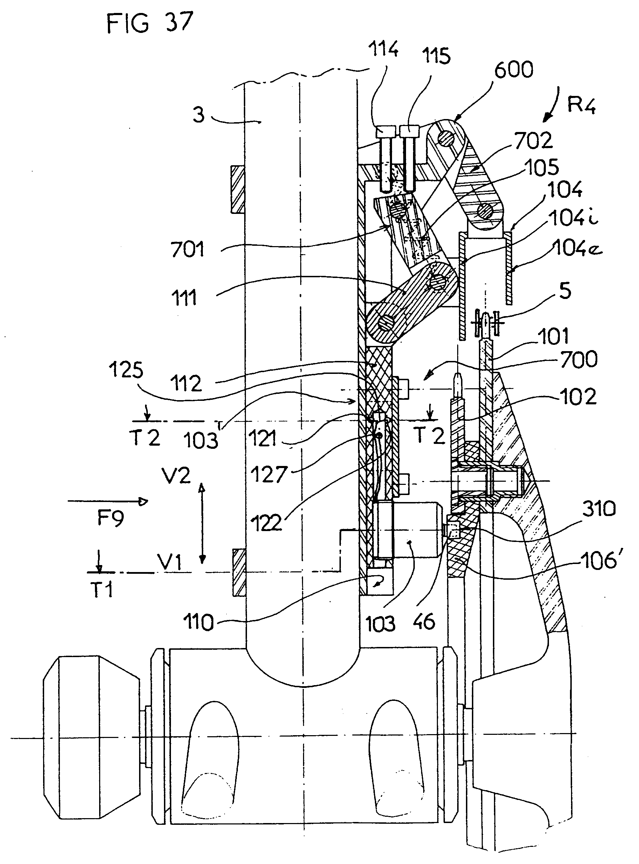

Les figures 37 à 42 illustrent une variante du mode d'exécution de la figure 36.

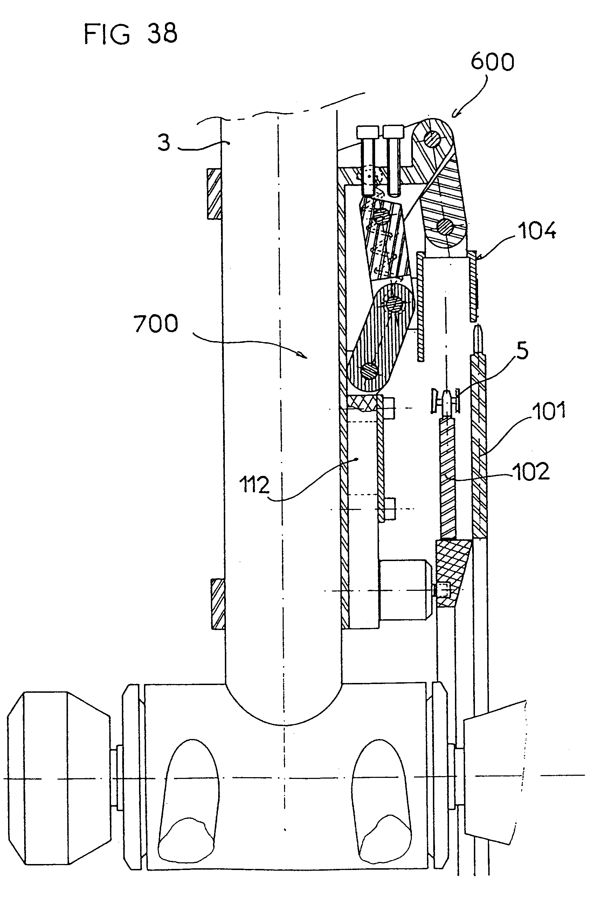

Les figures 37 et 38 sont des vues en coupe partielle du dispositif dans deux positions successives.

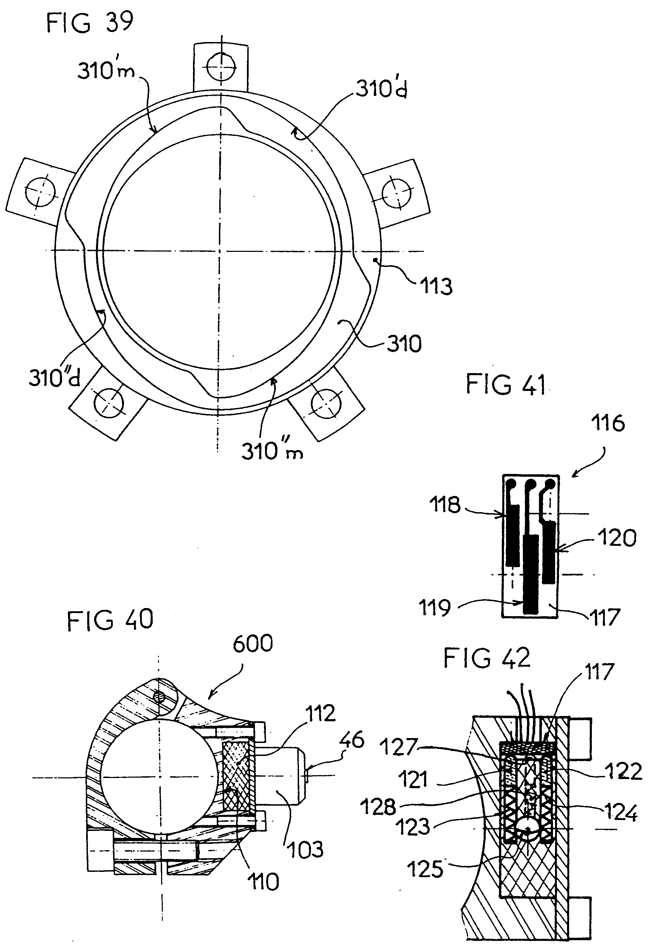

La figure 39 est une vue selon son axe d'un des éléments.

La figure 40 est une coupe T1-T1 de la figure 37.

La figure 41 illustre un détail.

La figure 42 est une vue en coupe selon T2-T2 de la figure 37, illustrant d'autres détails de construction.

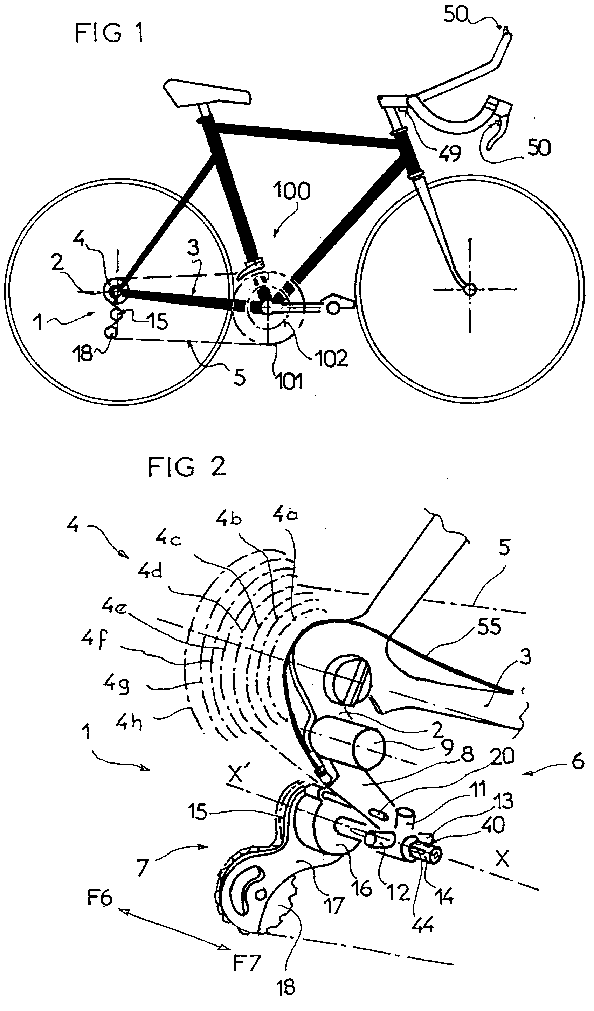

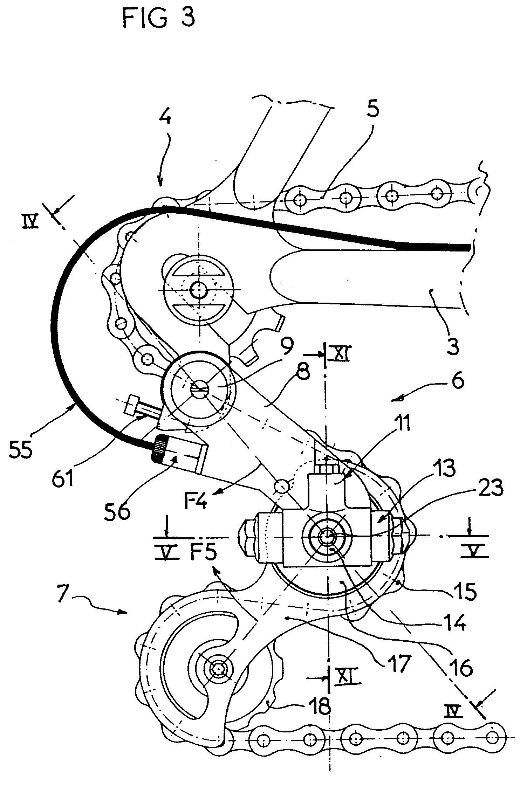

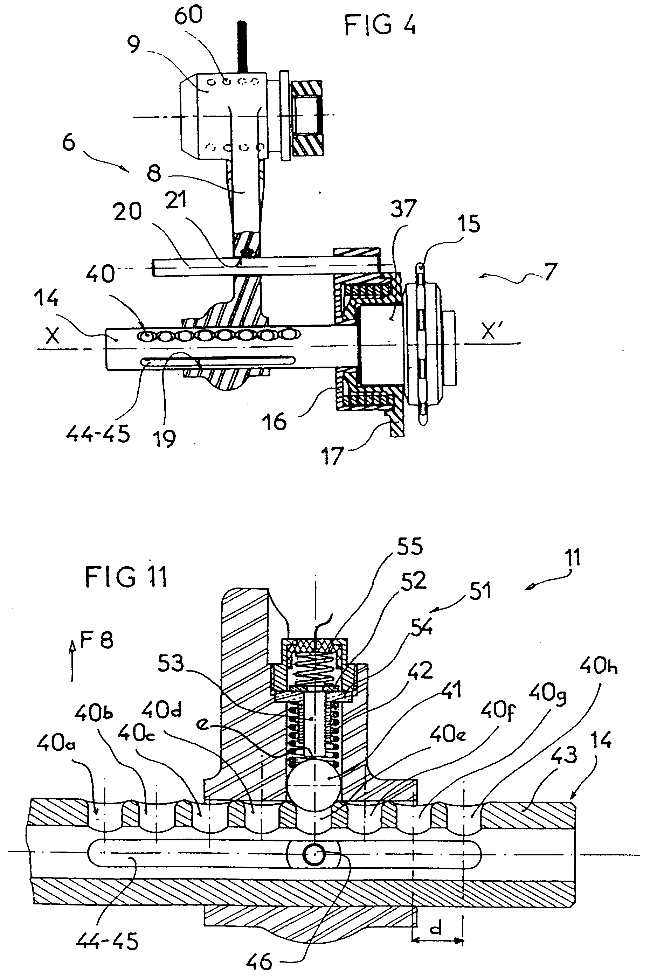

Le premier mode de réalisation illustré par les figures 1 à 26 est un dispositif de changement de vitesses du type dit "dérailleur arrière" permettant par déplacement latéral de la chaîne, le passage de celle-ci d'un pignon à l'autre, soit dans le sens de montée des vitesses par déplacement latéral selon F6, soit dans le sens de descente des vitesses par déplacement latéral selon F7. Le cycle est de type connu et présente un plan de symétrie générale (P).

Le dispositif de changement de vitesses selon le premier mode de réalisation, donné à titre d'exemple et portant la référence générale (1) est, de façon connue en soi, disposé de telle sorte à être fixé sur une patte (2) du cadre (3) du cycle. La patte de fixation (2) est constituée par un prolongement inférieur de la fourche du côté où se trouve la série de pignons de démultiplication (4). Selon le mode de réalisation, ladite série de pignons (4) comprend par exemple huit pignons ((4a, 4b, 4c, 4d, 4e, 4f, 4g, 4h) qui sont bien entendu, de façon connue en soi, de diamètre de plus en plus petit vers l'extérieur (EX) pour définir par coopération sélective avec la chaîne, les rapports de transmission.

Le dispositif selon l'invention comprend, comme nous le verrons plus loin de façon plus détaillée dans la description, des moyens de transformation de mouvement (MT) transformant le mouvement de rotation d'un pignon en un déplacement latéral d'un ensemble mobile de déraillement. Par ailleurs, il comprend des moyens de commande (MC) permettant le déclenchement des montées et ou des descentes de vitesses, ainsi que des moyens d'indexation (MI) donnant à l'ensemble mobile de déraillement (7) une position bien définie et précise par rapport aux différents pignons (4).

Le dérailleur arrière (1) comprend principalement un ensemble supérieur de retenue (6) sur lequel est retenu de façon mobile, un ensemble inférieur mobile de déraillement. L'ensemble supérieur de retenue (6) est constitué par un bras supérieur de retenue (8) dont l'extrémité supérieure (9) est fixée sur la patte de fixation (2) solidaire de la fourche arrière du vélo et dont l'extrémité inférieure (10) comprend un ensemble de commande et d'indexation constitué d'un dispositif d'indexation (11) et de deux dispositifs de commande (12, 13), l'un des dispositifs (13) commandant la montée des vitesses, tandis que l'autre (12) commande la descente des vitesses.

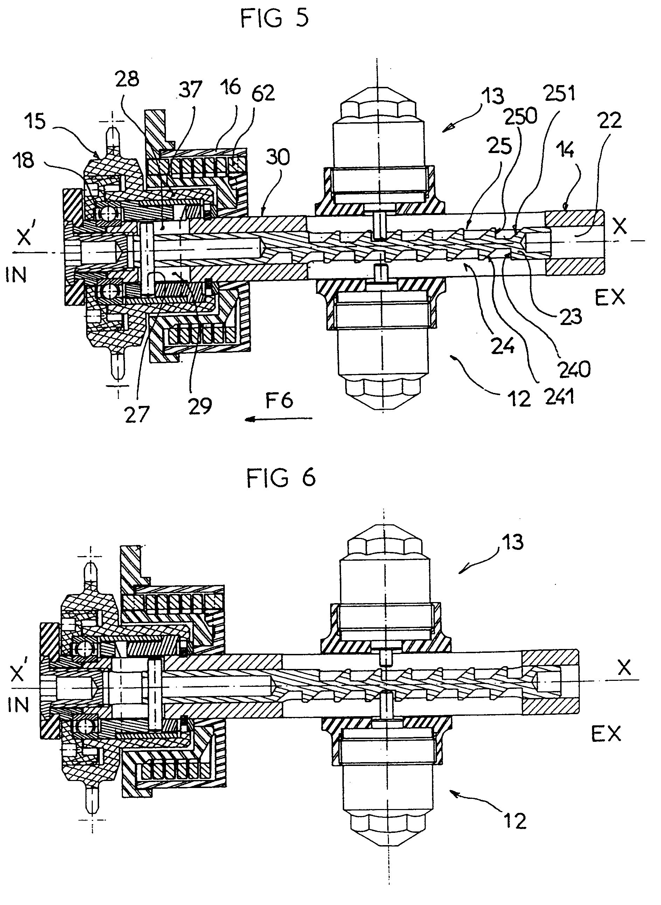

L'ensemble inférieur mobile (7) est constitué par un boîtier principal (14) de forme générale cylindrique d'axe (XX') dont l'une des extrémités est libre, tandis que l'autre porte une roulette supérieure de renvoi (15), un boîtier secondaire (16) et un bras de liaison (17) portant à sa partie inférieure, une roulette inférieure de renvoi (18). La roulette supérieure (15) et montée pivotante sur le boîtier principal (14) par l'intermédiaire d'un roulement à bille (18). Le boîtier principal (14) est par ailleurs monté coulissant selon son axe (XX') sur l'extrémité inférieure (10) du bras de retenue (8) qui comprend un trou inférieur de guidage (19), et son blocage en pivotement par rapport à l'ensemble supérieur de retenue (6) est assuré par une tige de guidage secondaire (20) solidaire du boîtier secondaire (16), disposée parallèlement à l'axe (XX') et destinée à coulisser dans un trou secondaire de guidage (21) réalisé dans le bras supérieur de retenue (8). Les déplacements latéraux de l'ensemble de déraillement (7) sont des translations latérales selon l'axe (XX') qui est avantageusement perpendiculaire au plan (P). Le boîtier principal coulissant (14) comprend un trou central longitudinal (22) d'axe (XX'), destiné à constituer un logement de coulissement pour une tige de commande (23) dont les mouvements de coulissement dans le logement sont commandés par la rotation de la roulette supérieure (15), comme nous le verrons plus loin. Ladite tige de commande (23) comprend une première succession (25) de dents de commande de montée des vitesses et une deuxième succession (24) de dents de commande de descente des vitesses. Le nombre des dents étant bien entendu fonction du nombre de pignons. Chacune des dents de commande est constituée d'une part par une paroi perpendiculaire à l'axe (XX'), et d'autre part, par une paroi inclinée par rapport audit axe (XX'), de façon à constituer entre deux dents adjacentes, un profil en creux dans lequel le doigt de commande correspondant peut prendre place en position active de commande. Ainsi, et comme cela apparaît sur la figure 5, la succession (25) de dents de commande de montée des vitesses est telle que chaque profil en creux est limité par une paroi perpendiculaire (250) interne (IN) et une rampe inclinée (251) externe (EX), et la succession (24) de dents de commande de descente des vitesses est telle que chaque profil en creux est limité par une paroi perpendiculaire (240) externe (EX) et une rampe inclinée (241) interne (IN).

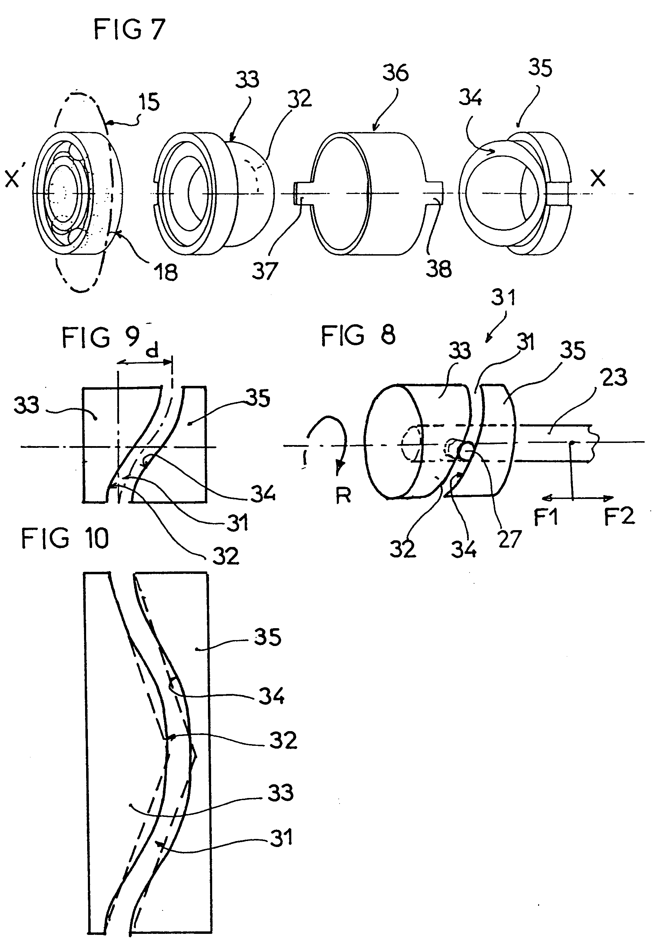

Par ailleurs, l'extrémité (26) de la tige de commande (23) disposée du côté du boîtier secondaire (16) comprend un axe de transmission (27) qui lui est solidaire et est disposé perpendiculairement à l'axe (XX'). Cet axe de transmission (27) permet d'une part d'immobiliser la rotation sur elle-même de la tige de commande, tout en en permettant son coulissement alternatif selon F1 et F2. A cet effet, l'axe de transmission (27) est guidé par deux lumières longitudinales (28, 29) disposées diamétralement sur la paroi périphérique du boîtier principal (14). Par ailleurs, l'une des extrémités de l'axe de transmission (27) fait saillie par rapport à la surface extérieure périphérique (30) du boîtier (14) et coopère avec un chemin de guidage (31) solidaire en rotation avec la roulette supérieure (15). Le chemin de guidage (31) est limité latéralement par deux rampes de guidage parallèles et espacées l'une de l'autre d'une distance égale au diamètre de l'axe de transmission, au jeu de fonctionnement près. Le chemin de guidage (31) est périphérique et sinusoïdal, et est constitué par une rampe de montée des vitesses (32) réalisée par la paroi périphérique d'une première bague (33), et une rampe de descente des vitesses (34) réalisée dans la paroi périphérique d'une deuxième bague (35). La figure 10 est une vue représentant en développé, les surfaces périphériques des deux bagues montrant plus particulièrement le chemin de guidage et sa forme sinusoïdale. Bien entendu,ce chemin de guidage pourrait avoir d'autres formes, telle que celle représentée en trait interrompu. Les deux rampes étant parallèles entre elles et leur écartement étant assuré par une bague intermédiaire (36) comprenant deux saillies d'indexation et d'entraînement (37, 38). La première bague (33), la deuxième bague (35) ainsi que la bague intermédiaire (36) d'entraînement formant un ensemble solidaire en rotation avec la roulette supérieure (15) logée à l'intérieur d'un prolongement tubulaire (37) de celle-ci.

L'extrémité du boîtier principal opposé au côté où se trouve la roulette supérieure, comprend d'une part sur sa génératrice supérieure, une succession de creux d'indexation (40a, 40b, 40c, 40d, 40e, 40f, 40g, 40h) destinés à recevoir une bille (41) du dispositif d'indexation (11) sollicitée vers le bas par un ressort de compression (42) constituant ainsi les moyens d'indexation (MI). Par ailleurs, la paroi périphérique (43) du boîtier principal (14) comprend deux lumières longitudinales (44, 45) disposées diamétralement et permettant le passage des doigts de commande (46) des dispositifs de commande (12, 13). Les creux d'indexation (40a, 40b, 40c, 40d, 40e, 40f, 40g, 40h) sont constitués par des trous cylindriques radiaux réalisés dans la paroi périphérique (43) du boîtier principal (14). Le nombre de creux d'indexation correspond au nombre de pignons que comporte la roue arrière du cycle, et leur distance respective "d" est égale sensiblement à la distance "d" séparant les plans de deux pignons adjacents. De même, leur position est fonction de la position que doit avoir la roulette supérieure (15) par rapport aux différents pignons.

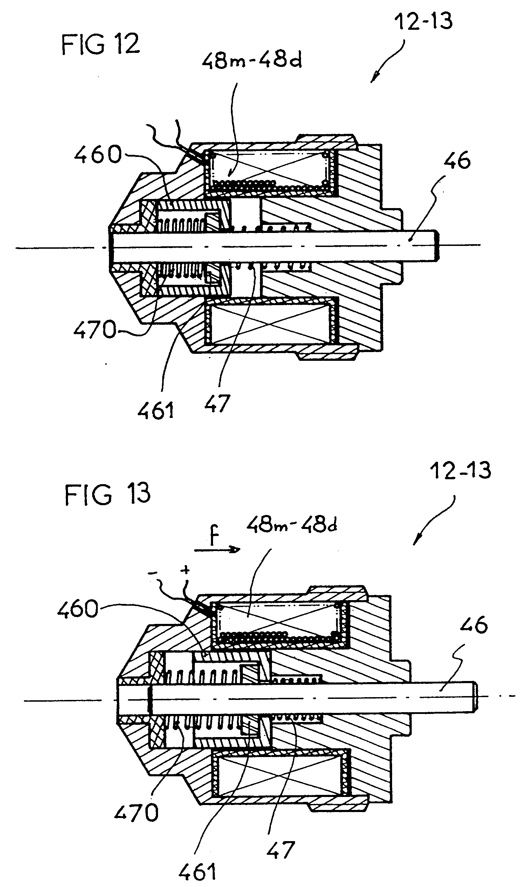

Les moyens de commande (MC) sont constitués par deux dispositifs de commande, un premier dispositif (12) ou dispositif de commande de descente des vitesses et un deuxième dispositif (13) ou dispositif de commande de montée des vitesses. Chacun des dispositifs de commande (figures 12, 13) comprend un doigt de commande (46) constitué par une tige cylindrique, amagnétique, mobile en translation selon son axe, entre deux positions : une position escamotée de repos et une position en saillie d'actionnement dans laquelle il se trouve être engagé dans l'un des profils en creux de la tige de commande. Chaque dispositif comprend par ailleurs deux ressorts de compression : un premier ressort (47) destiné à retenir le doigt (46) ainsi que le plongeur tubulaire mobile (460) indépendant dans leur position escamotée, et un deuxième ressort (470) de plus faible puissance dont sa fonction sera décrite plus loin. De plus, chacun des dispositif comprend un électroaimant (48m-48d) qui, lorsqu'il est alimenté en courant électrique, est destiné à créer une force électromotrice provoquant le déplacement selon "f" du plongeur tubulaire mobile (460) indépendant. En position de repos, le plongeur est sollicité par le ressort (47) en appui contre une bague (461) solidaire du doigt (46), comme cela apparaît à la figure 12.

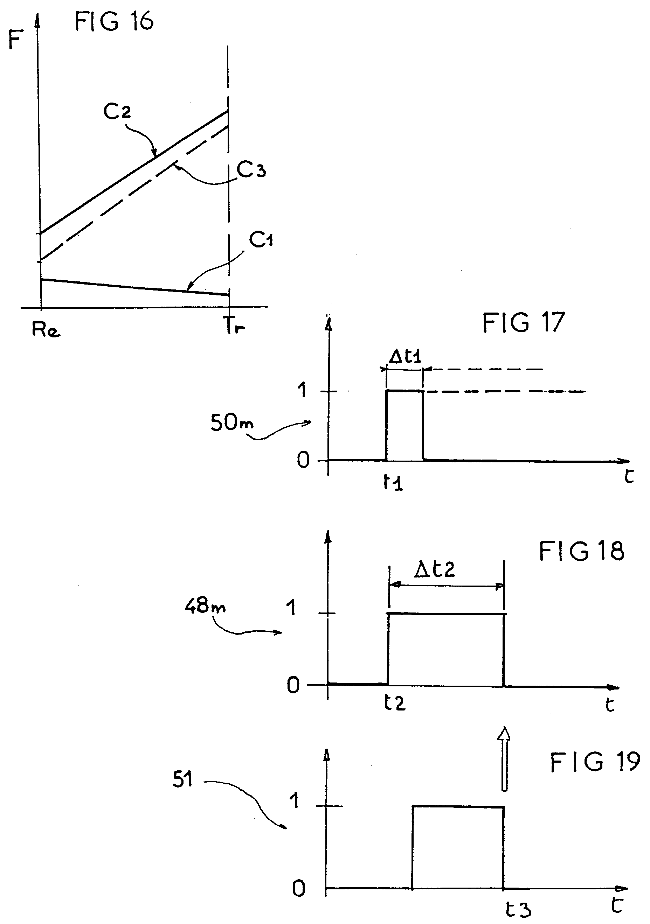

La figure 16 est un diagramme illustrant les caractéristiques des deux ressorts (47, 470). La courbe (C2) représentant les variations des efforts du ressort (47) de sa position de repos (Re) à sa position de travail (Tr), tandis que la courbe (C1) représente les variations des efforts du ressort (470) dans ces mêmes conditions. La courbe (C3) est une courbe illustrant la différence des efforts entre ceux du ressort (47) et ceux du ressort (470).

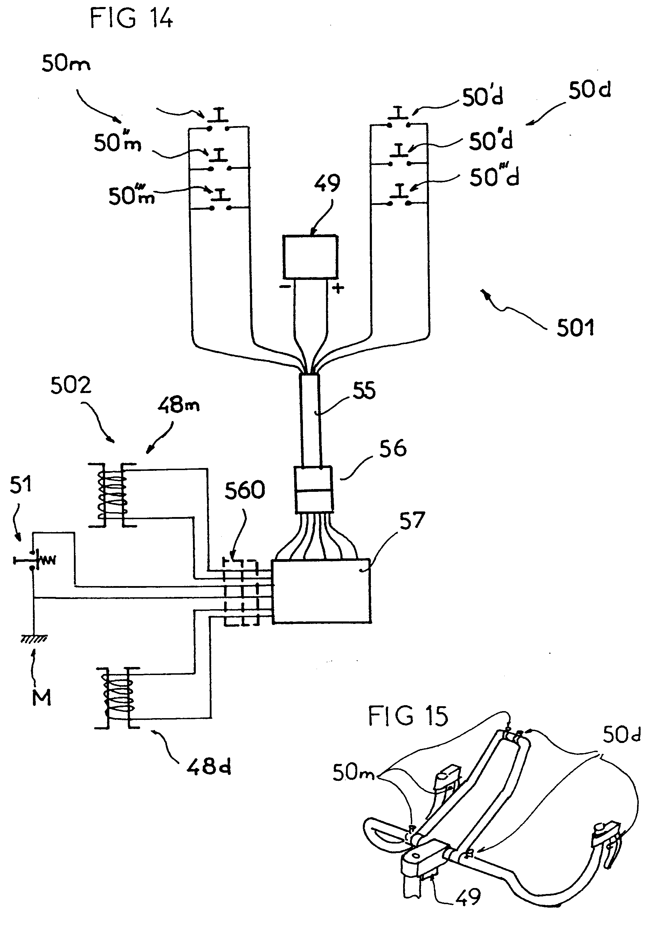

La figure 14 illustre de façon schématique et à titre d'exemple, un circuit électrique qui comprend un générateur de courant continu tel que des piles électriques (49) permettant d'alimenter l'ensemble du circuit en courant électrique, et notamment l'électroaimant (48m) du dispositif de montée des vitesses ou l'électroaimant (48d) du dispositif de descente des vitesses quand l'un ou l'autre des circuits correspondant est alimenté. Le circuit comprend par ailleurs un ou plusieurs interrupteurs (50m) de montée des vitesses et un ou plusieurs interrupteurs (50d) de descente des vitesses. Chaque interrupteur est par exemple du type à bouton-poussoir et si le dispositif comprend plusieurs interrupteurs, comme cela est illustré à la figure 11, ceux-ci sont branchés en parallèle, de façon à alimenter l'électroaimant correspondant par action du cycliste sur l'un ou l'autre de ceux-ci. De plus, on peut placer avantageusement tous les interrupteurs de descente des vitesses, du côté droit du cycle et tous les interrupteurs de montée des vitesses, du côté gauche du cycle, et par exemple placer un interrupteur de descente des vitesses (50'd) sous la poignée de frein avant, et un interrupteur de montée des vitesses (50'm) sous la poignée de frein arrière. Bien entendu, il est possible de placer des interrupteurs à n'importe quel endroit souhaitable, tel que cela est représenté à la figure 15 où l'on a disposé des interrupteurs sur la partie avant centrale du guidon et sur la partie centrale médiane.

Par ailleurs, le circuit électrique est complété par un contacteur complémentaire (51) disposé dans le dispositif d'indexation (11), plus particulièrement représenté à la figure 8. Ce contacteur complémentaire (51) est fermé en position de repos et mis à la masse (M). Il est constitué par une rondelle métallique (52) solidaire d'une tige de palpage (53) en matériau isolant électriquement, par exemple en un matériau plastique, et sollicitée par un ressort (55) en appui sur une autre rondelle métallique d'appui (54) reliée à la masse. On notera, comme cela apparaît à la figure 11, qu'en position de repos, la tige de palpage (53) n'est pas en contact avec la bille (41). Ainsi, pour assurer les contacts mécanique et électrique, on a prévu un jeu "e" entre ladite tige (53) et la bille (41). Le circuit électrique comprend deux sous-ensembles : un sous-ensemble d'alimentation (501) et un sous-ensemble d'action (502), le branchement de l'un des sous-ensembles avec l'autre se faisant par le câble électrique (55) et un connecteur électrique (56), qui pourrait aussi être disposé tel qu'il est représenté en trait interrompu sous la référence (560). Il est également prévu un circuit électronique de traitement des signaux électriques (57) qui peut être réalisé de multiples façons et comportant par exemple un microprocesseur. Le fonctionnement du circuit électrique illustré par les diagrammes des figures 17, 18, 19 est le suivant : le cycliste désireux par exemple de monter ses vitesses, actionne à un instant "t1", l'un des interrupteurs (50m) de commande en lui donnant une impulsion qui durera "Δt1" (voir figure 17). L'électroaimant (48m) étant alors alimenté à l'instant "t2" sensiblement égal à "t1" (figure 18), provoquera le déplacement selon "f" du plongeur (460m) correspondant, et ce, contre l'action du premier ressort (47). Le doigt de commande (46m) est alors libéré et s'engage dans un creux correspondant, sollicité selon "f" par le deuxième ressort (470). Selon une disposition avantageuse, l'électroaimant (48m) reste alimenté pendant un temps "Δt2" grâce à une disposition particulière du circuit électronique (57). L'ensemble mobile de déraillement (7) se trouve alors déplacé. Lors de ce déplacement, la bille (41) du dispositif d'indexation sollicitée en retrait, repousse la tige de palpage (53) provoquant l'ouverture du contacteur complémentaire (51), puis se referme à un instant "t3" dès que la bille d'indexation (41) a retrouvé le creux suivant d'indexation (figure 19) commandant ou provoquant ainsi la fin de l'excitation de l'électroaimant (48m) (figure 18).

La rotation de la roulette supérieure (15) entraînée par la chaîne (5) provoque la rotation selon (R) autour de l'axe (XX') de l'ensemble de guidage constitué par la première bague (33), la bague intermédiaire (36) et la deuxième bague (35). Ainsi, par coopération de l'axe d'entraînement (27) et du chemin de guidage (31), et plus précisément des parois formant la rampe de guidage, le mouvement de rotation (R) de la roulette supérieure sera transformé en un mouvement de translation alternatif dans un sens et dans l'autre, selon alternativement F1 et F2 de la tige de commande. Ainsi à chaque rotation de la roulette (15), la tige de commande se déplacera selon son axe d'une position extrême, gauche à une position extrême, droite et inversement, et ce, en parcourant une distance (d1) avantageusement légèrement supérieure à la distance (d) séparant chaque creux d'indexation.

Le passage d'une vitesse à l'autre se fera grâce à la fermeture de l'un des interrupteurs. Ainsi, si le cycliste désire monter ses vitesses, il pourra alimenter l'électroaimant (48) du dispositif de commande de descente des vitesses (13) simplement en fermant l'un des interrupteurs de commande de montée des vitesses (50m) provoquant alors, et comme cela a déjà été expliqué, le déplacement du doigt de commande (46) qui se trouvera en prise avec la dent correspondant de la succession de dents (25) du dispositif de commande de montée des vitesses. La figure 5 illustre une telle situation. Etant donné la translation alternative selon F1, F2, le doigt de commande passera d'une dent à l'autre, provoquant alors le déplacement latéral selon F6 de l'ensemble mobile de déraillement vers le plan de symétrie générale (P) du cycle.

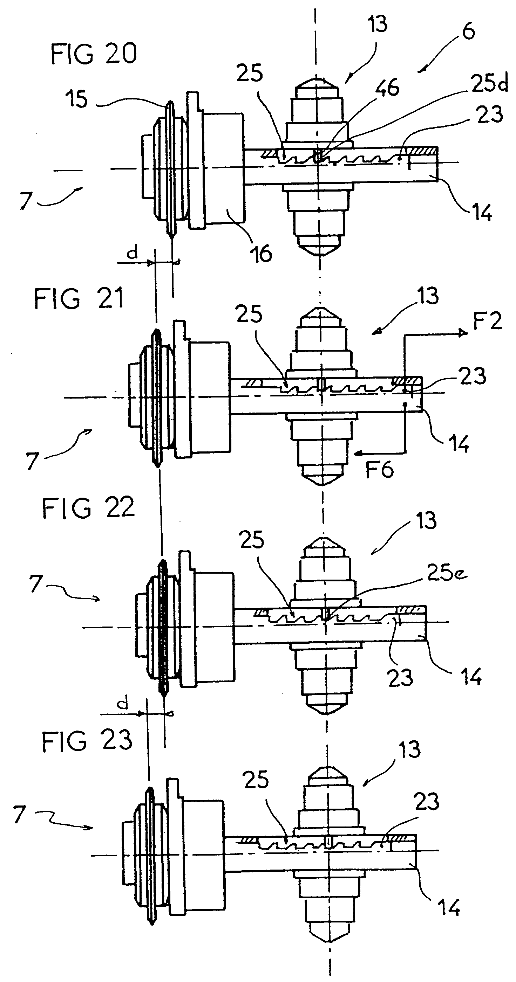

Les figures 20 à 26 illustrent le dispositif de changement de vitesses dans deux positions successives de montée des vitesses. Dans les positions des figures 20 et 24, la chaîne (5) est en prise avec l'un des pignons (4e) intermédiaires et le doigt de commande (46) est engagé dans le profil en creux (25d). Le coulissement selon F2 de la tige de commande (23) provoque par son appui sur le doigt de commande (46), le déplacement vers l'intérieur (IN) selon F6, de l'ensemble mobile de déraillement, d'une distance "d" correspondant à la distance entre les deux pignons (4e) et (4f) provoquant ainsi le déraillement de la chaîne (5) et son engagement sur le pignon suivant (4f), la bille d'indexation (41) étant alors engagée dans le creux d'indexation (40f) donnant une position définie audit ensemble de déraillement. Si l'interrupteur (50m) de montée des vitesses est maintenu fermé, le doigt de commande est toujours sollicité en position active et se trouvera engagé dans le creux adjacent suivant (25e) et l'ensemble mobile de déraillement sera à nouveau déplacé vers l'intérieur (IN) d'une distance "d", pour dérailler à nouveau la chaîne et le placer en prise avec le pignon suivant (4g), la bille d'indexation (41) se trouvant alors engagée dans le creux d'indexation (40g). Le cycliste peut ainsi, par action sur l'interrupteur de montée des vitesses, passer successivement d'un pignon à l'autre. La descente des vitesses se faisant par un processus similaire, mais par fermeture de l'un des interrupteurs de descente des vitesses.

Il va de soi que le dispositif de changement de vitesses illustré aux figures 1 à 26 constitue aussi un dispositif de renvoi et de tension pour la chaîne, et l'ensemble mobile de déraillement (7) ainsi que l'ensemble supérieur de retenue (6) sont sollicités chacun par un dispositif élastique. Ainsi l'ensemble supérieur de retenue (6) comprend d'une part un système élastique de rappel (60) sollicitant en rotation l'ensemble du dispositif vers l'arrière (AR), selon F4, et d'autre part, un système de butée (61) limitant la course du pivotement de l'ensemble. Par ailleurs, le bras de liaison (17) est articulé dans le boîtier secondaire pour pivoter selon l'axe (XX') et est sollicité vers l'arrière (AR) selon F5 par un deuxième système élastique (62).

Il va de soi que le déplacement transversal de l'ensemble mobile de déraillement peut être de tout type, c'est à dire une translation, comme cela est représenté aux figures 1 à 26, ou un pivotement ou basculement, tel qu'il est illustré dans le mode d'exécution de la figure 36. Dans les modes de réalisation illustrés par les figures 1 à 26, la translation de l'ensemble mobile de déraillement se fait selon un axe (XX') perpendiculaire au plan (P) général de symétrie du cycle, mais bien entendu, on ne sortirait pas du cadre de l'invention si cet axe, tout en étant concourant avec le plan (P), était incliné soit vers le bas, soit vers le haut, soit vers l'avant, soit vers l'arrière, soit selon une inclinaison combinée, par exemple vers le bas et vers l'arrière, ou vers le bas et vers l'avant, ou tout autre type de combinaison.

Les figures 27 à 29 illustrent une variante de réalisation d'un dérailleur arrière, selon laquelle le déplacement de l'ensemble mobile de déraillement (7) se fait selon une translation latérale, de direction (XX') inclinée par rapport au plan (P) général de symétrie du cycle, d'un angle (α) compris entre 40° et 90°, et par exemple d'environ 60 degrés. Pour une meilleure compréhension de cette variante, les éléments similaires, du moins dans leur fonction, portent les mêmes références que pour le mode de réalisation illustré aux figures 1 à 26, et on se reportera alors à la description correspondante pour tout ce qui ne sera pas décrit expressément ci-après.

Comme précédemment, le dérailleur comprend un ensemble inférieur de déraillement (7) mobile en translation latérale sur un ensemble supérieur de retenue (6). Ledit ensemble inférieur mobile (7) est, comme précédemment, constitué par un boîtier principal (14) dont l'une des extrémités porte la roulette supérieure de renvoi (15), le boîtier secondaire (16) et le bras de liaison (17) portant à sa partie inférieure, la roulette inférieure de renvoi (18). Le boîtier principal (14) est par ailleurs monté coulissant selon son axe (XX') sur l'extrémité du bras de retenue (8) qui comprend un trou inférieur de guidage (19). Dans cette variante, le boîtier principal (14) a une section rectangulaire, ce qui, par coopération avec le trou de guidage correspondant (19), permet son blocage en pivotement, tout en lui permettant son coulissement selon son axe (XX'). La roulette de renvoi supérieure (15) est montée pivotante dans le boîtier secondaire (16) autour d'un axe (X1,X'1) perpendiculaire au plan (P) de symétrie générale. Les deux axes (XX') et (X1,X'1) sont concourants pour former un angle interne (α) qui, dans la variante illustrée, est d'environ 60 degrés. Notons aussi que le boîtier principal (14) comprend un trou central longitudinal de coulissement (22) pour la tige de commande (23) dont les mouvements de coulissement dans ledit trou sont commandés par la rotation de la roulette supérieure de renvoi. Bien entendu, le boîtier secondaire (16) comprend les mêmes éléments que pour le mode de réalisation précédemment décrit et on y trouve notamment le chemin de guidage (31) avec ses rampes de montée et de descente de vitesses. On y trouve de même, les deux lumières longitudinales (28, 29) de guidage pour l'axe de transmission (27) de la tige de commande (23).

La figure 28 schématique illustre un premier mode d'exécution de la variante, selon laquelle la tige de commande (23) comprend un brin principal (230) dont l'extrémité inférieure est prolongée par un brin secondaire (231) portant l'axe de transmission. Ledit brin principal (230) porte latéralement les deux successions de dents (24, 25) ayant un axe général (mm') concourant avec l'axe (nn') du brin secondaire (231). L'axe (mm') forme avec l'axe (nn') un angle sensiblement égal à l'angle (∝) formé par l'axe (XX') et l'axe (X1,X'1). Notons que la section du brin principal est variable pour s'amincir progressivement en allant vers sa zone de jonction avec le brin secondaire, l'extrémité supérieure élargie (232) constituant une zone de guidage pour la tige en coopération avec le logement de coulissement (22) du boîtier principal (14). Ledit logement a une section constante permettant de créer ainsi dans sa partie inférieure, un espace inférieur (233) permettant le basculement (selon b1,b2) de la tige de commande par rapport à son point de pivotement (234).

La figure 29 est une vue similaire à la figure 37 illustrant un autre mode d'exécution, selon lequel la tige de commande (23) comprend un brin principal (235) comprenant les deux successions de dents (24, 25) et qui est guidé en translation selon son axe, dans le logement de coulissement (22) du boîtier principal (14) par ses deux extrémités (236, 237). Selon ce mode d'exécution, l'axe de transmission (27) est solidaire de l'extrémité d'un bras intermédiaire mobile (238) dont l'autre extrémité est articulée sur l'extrémité inférieure (236) du brin principal (235) autour d'un axe (239). Notons par ailleurs que le corps du bras intermédiaire mobile, pivotant (238) a une forme générale courbe.

Les figures 30 à 33 illustrent un perfectionnement de la tige de commande (23) dont la succession de dents (25) destinées à la montée des vitesses comprend une dent supplémentaire amovible, au cas où un pignon supplémentaire est monté sur le moyeu de pignon. Ainsi, la succession de dents (24) pour la descente de vitesses comprend 7 dents, tandis que la succession de dents (25) comprend 6 dents fixes et une dent supplémentaire pouvant être mise en place ou supprimée. A cet effet, l'extrémité supérieure (237) de la tige de commande comprend une pièce mobile (240) pivotante autour de l'axe (mm') pour prendre une position active (figures 32 et 33) et une position inactive (figures 30 et 31). Ladite pièce mobile montée sur une vis (241) et constituée par un secteur, comprend sur sa paroi latérale, une partie plane d'obturation (242) et une partie en creux (243) permettant de former la dent supplémentaire (25s). Dans la position inactive, la partie plane d'obturation (242) se trouve dans l'alignement de la succession de dents (25), tandis que dans la position active, c'est la partie en creux (243) qui s'y trouve. Avantageusement, la vis (241) comprend une tête fendue (244) et une extrémité (245) formant axe de pivotement par coopération avec la tige de commande qui comprend par ailleurs, un dégagement recevant la pièce mobile (240). Notons qu'un système d'indexation permet aux deux positions de la pièce mobile, d'être stables. Ledit système d'indexation est constitué par un creux (247) réalisé sur la pièce mobile destinée à coopérer avec une saillie correspondante (248) de la tige de commande. Notons aussi qu'un ressort (249) est destiné à maintenir la coopération, et que le passage d'une position à l'autre se fait par pivotement de la vis (241) qui comprend une partie intermédiaire (250) en engrènement avec la pièce mobile.

Un autre mode de réalisation est illustré aux figures 34 et 35. Selon cette variante, les moyens de transformation (MT) sont constitués par un ensemble de pignons coopérant les uns avec les autres. Selon cette autre disposition, la roulette de renvoi (15) est solidaire d'un premier pignon (150) qui coopère avec l'un des pignons (151) d'un satellite (152) comprenant un autre pignon (153). Ledit satellite étant pivotant autour d'un axe (X1X1') solidaire d'un planétaire (154) retenu par ailleurs pivotant autour d'un axe (155) aligné sur l'axe (XX'). D'autre part, l'extrémité (156) dudit axe (155) comprend une partie filetée (157) engagée dans un trou taraudé (158) solidaire du bras de retenue (8) de l'ensemble de retenue (6). De plus, l'ensemble mobile (7) comprend un premier engrenage (159) et une couronne dentée intérieurement (160), chacun solidaire respectivement d'un disque de commande (159c-160c). L'engrenage extérieur (159) engrenant avec le pignon (153) du satellite, tandis que l'engrenage intérieur (160) engrène avec l'autre pignon (151) dudit satellite. L'ensemble comprend des moyens de commande du type de ceux décrits précédemment et constitués par un dispositif de commande de descente des vitesses (120) et un dispositif de commande de montée des vitesses (130). Chacun des disques de commande comprenant un cran de blocage (162) dans lequel doit s'engager le doigt de commande du dispositif de commande dans sa position en saillie de commande.

On comprendra aisément que si le doigt de commande du dispositif de descente des vitesses bloque la rotation du disque (160c), l'axe (155) pivotera dans le même sens provoquant ainsi le déplacement selon F7 de l'ensemble mobile de déraillement (7) par rapport au bras de retenue (8). De même, si le doigt de commande du dispositif de montée des vitesses bloque la rotation du disque (159), l'axe (155) pivotera en sens inverse provoquant ainsi le déplacement selon F6 de l'ensemble mobile de déraillement (7). Ainsi seront assurées aussi bien les descentes des vitesses que les montées de vitesses.

Il va de soi que le dispositif de changement des vitesses selon l'invention n'est pas limité à son application dans le cadre d'un dérailleur arrière. En effet, le dispositif selon l'invention trouve son application dans tout type de changement de vitesses et par exemple, peut être utilisé pour un dispositif de changement de plateaux ou dérailleur avant, tel que celui portant la référence générale (100) sur les figures 1 et 36. De façon connue en soi, le dispositif de transmission avant comprend par exemple deux plateaux ou pignons (101) et (102) de diamètres différents, le plateau le plus grand se trouvant être externe (EX), tandis que le plus petit est disposé côté interne (IN). Le dérailleur avant (100) comprend, comme précédemment, un ensemble supérieure de retenue (600) sur lequel est monté mobile un ensemble inférieur mobile de déraillement (700) constitué de deux biellettes articulées (701-702) pivotant sur ledit ensemble de retenue par leur extrémité supérieure, tandis que leurs extrémité inférieure comprend d'une part un dispositif de commande (103) et un organe de déraillement (104). Ledit ensemble de déraillement étant retenue dans une position stable grâce à un système élastique (105).

Les moyens de transformation sont constitués par une rampe de guidage (310) périphérique sinusoïdale réalisée sur la paroi périphérique d'une bague (106) solidaire du plateau (102). L'organe de déraillement (104) en lui-même est du type connu et comprend deux flancs (104i, 104e) entre lesquels circule la chaîne (5). On comprendra que l'actionnement du dispositif de commande (103) permettra l'engagement du doigt de commande (46) dans la rampe de guidage (310) provoquant alors le déplacement latéral selon F6 ou f7 de l'organe de déraillement (104) permettant ainsi les changements de vitesses.

Les figures 37 à 42 illustrent une variante de réalisation de la figure 36. Pour la compréhension des dessins, les éléments similaires portent les même références. Ainsi, le dispositif de transmission avant comprend deux plateaux (101) et (102) de diamètres différents, le plateau le plus grand se trouvant être externe (EX), tandis que le plus petit est disposé côté interne (IN). Le dérailleur avant (100) comprend un ensemble supérieur de retenue (600) sur lequel est monté mobile un ensemble inférieur mobile de déraillement (700) constitué de deux biellettes articulées (701-702) pivotant sur ledit ensemble de retenue par leur extrémité supérieure, tandis que leurs extrémité inférieure comprend d'une part un ensemble de commande (103') et un organe de déraillement (104). Ledit ensemble de déraillement étant avantageusement retenu dans une position stable grâce à un système élastique (105).

L'ensemble de commande (103') est disposé coulissant verticalement dans une glissière ou logement de coulissement (110) solidaire de l'ensemble de retenue supérieur (600) et comprend une biellette supérieure (111) reliant la partie inférieure de la biellette (701) à un coulisseau (112) portant le dispositif de commande (103). Les moyens de transformation sont constitués par une rampe de guidage (310) réalisée dans la paroi d'un disque vertical (113) solidaire des plateaux (101, 102). La rampe de guidage (310) et formée par une rainure limitée par au moins une came interne de montée des vitesses (310'm, 310''m) et au moins une came externe de descente des vitesses (310'd, 310''d). Avantageusement le disque (113) comprend deux cames internes de montée des vitesses et deux cames externes de descente des vitesses. Comme on peut le remarquer sur la figure 39, les cames de montée des vitesses sont formées par une courbe dont chaque point est de plus en plus éloigné du centre, tandis que les cames de descente des vitesses sont formées par une courbe dont chaque point est de moins en moins éloigné dudit centre.

L'organe de déraillement (104) comprend deux flancs (104i, 104e) entre lesquels circule la chaîne (5). On comprendra que l'actionnement du dispositif de commande (103) permettra l'engagement du doigt de commande (46) dans la rampe de guidage (310) provoquant alors le déplacement vertical vers le bas ou vers le haut, du coulisseau (112). Ainsi par exemple, le déplacement vers le bas selon "V1" du coulisseau permettra le passage de la position représentée à la figure 37 à la position représentée à la figure 38. La position stable de la figure 38 sera maintenue par l'action du système élastique (105). Le dispositif d'indexation définissant les deux positions étant réglable et constitué par exemple par les deux vis (114, 115) servant de butée.

Avantageusement le circuit électrique comprend un dispositif d'alimentation et de captage de fin de course (116) constitué par une plaquette (117) solidaire de l'ensemble de retenue et disposé dans le logement de coulissement (110) et trois plots de connexion (121, 122, 127) solidaires du coulisseau (112) et sollicités contre ladite plaquette (117) par des ressorts (123, 124, 128). La plaquette (117) comporte trois pistes : une piste gauche (118) de descente du plateau, une piste centrale (119) ou piste de correction commune, une piste droite (120) étant la piste de montée du plateau. La piste centrale (119) est reliée à l'une des bornes de l'électroaimant (103), tandis que les deux plots gauche et droit sont reliés d'une part électriquement entre eux par la liaison (125) et d'autre part, à l'autre borne dudit électroaimant. Dans la position représentée à la figure 37, le plot (121) est en contact avec la piste (118) tandis que le plot (122) n'est pas en contact avec la piste correspondante. Si l'on ferme le circuit électrique de descente des vitesses pour alimenter, l'électroaimant (103) est alimenté provoquant l'engagement du doigt de commande (46) dans le chemin de guidage (310). Le coulisseau sera alors déplacé vers le bas selon "V1" par action de l'une des rampes de descente des vitesses (310'd, 310''d). Dans la position basse du coulisseau, le plot (121) quitte la piste gauche (118) et l'électroaimant n'étant plus alimenté, le doigt de commande (46) retournera vers sa position escamotée. Comme nous l'avons déjà précisé, le déplacement vers le bas du coulisseau provoquera la rotation selon "R4" et l'ensemble mobile de déraillement et le dispositif passera de la position illustrée à la figure 37 à la position illustrée à la figure 38. Inversement, la montée des vitesses se fera par fermeture du circuit électrique de montée des vitesses alimentant à nouveau l'électroaimant dans les mêmes conditions que précédemment.

Bien entendu, l'invention n'est pas limitée strictement à son utilisation dans un contexte du type chaîne/pignon, mais peut aussi être adaptée à tout autre type de transmission, comme par exemple du type à courroie crantée et engrenages.

Il faut noter que l'on pourrait aussi utiliser des interrupteurs ayant plusieurs fonctions, à savoir à la fois la fonction d'interrupteur de commande de montée des vitesses et d'interrupteur de commande de descentes des vitesses.

## Revendications

1. Dispositif de changement de vitesses pour cycle prévu pour coopérer avec un ensemble de transmission comprenant une chaîne sans fin (5), et un groupe de plateaux (101, 102) ou de pignons (4a, 4b, 4c, 4d, 4e, 4f, 4g, 4h) assemblés de façon coaxiale, comprenant un ensemble mobile de déraillement (7, 700) prévu pour déplacer latéralement la chaîne d'un plateau ou d'un pignon à un autre et des moyens de commande du déplacement de l'ensemble mobile de déraillement, caractérisé par le fait que le dispositif comprenne des moyens de transformation solidaires en rotation avec un élément rotatif (15, 106, 160), prévu pour être entraîné en rotation par la chaîne, et au moins un doigt de commande (46) mobile entre une position escamotée de repos et une position de saillie dans laquelle le doigt de commande coopère avec les moyens de transformation, cette coopération transformant la rotation de l'élément rotatif en un déplacement latéral de l'ensemble mobile de déraillement.

2. Dispositif selon la revendication 1, caractérisé en ce que les moyens de transformation comprennent un chemin de guidage (31, 310) comprenant une rampe de montée de vitesses (32) et une rampe de descente de vitesses (34).

3. Dispositif selon la revendication 1, caractérisé en ce que les moyens de transformation comprennent une tige (23) dentée mobile transversalement en relation avec la rotation de l'élément rotatif (15).

4. Dispositif de changement de vitesses selon la revendication 1, caractérisé par le fait que le doigt de commande (46) est sollicité en position de saillie par un électroaimant (48).

5. Dispositif de changement de vitesses selon la revendication 1, caractérisé en ce que le doigt de commande (46) est sollicité en position escamotée de repos par un ressort de compression.

6. Dispositif de changement de vitesses selon la revendication 5, caractérisé en ce que les moyens de commande comprennent un plongeur (460) métallique indépendant du doigt de commande (46) qui est en matériau amagnétique.

7. Dispositif de changement de vitesses selon la revendication 6, caractérisé en ce que les moyens de commande comprennent un circuit électrique d'alimentation constitué par une pile (49) et au moins un interrupteur de commande de montée des vitesses (50m) et/ou de commande de descente des vitesses (50d).

8. Dispositif de changement de vitesses selon la revendication 1, caractérisé en ce qu'il est relié au cadre (3) du cycle et comprend un ensemble supérieur de retenue (6, 600) sur lequel est monté de façon mobile l'ensemble mobile de déraillement (7, 700).

9. Dispositif de changement de vitesses selon la revendication 8 caractérisé en ce qu'il comprend des moyens d'indexation (MI, 11, 41, 42, 40, 114, 115) pour définir la position de l'ensemble mobile de déraillement (7, 700), lesdits moyens d'indexation étant en partie solidaire de l'ensemble supérieur de retenue (6, 600) et en partie solidaire de l'ensemble mobile de déraillement (7, 700).

10. Dispositif de changement de vitesses selon l'une quelconque des revendications précédentes, où ledit dispositif est un dérailleur arrière comprenant un ensemble mobile de déraillement (7) qui présente une roulette supérieure de renvoi (15) et une roulette inférieure de renvoi (18) pivotante à la partie inférieure d'un bras de liaison (17), caractérisé par le fait que le chemin de guidage (31) est formé par au moins une bague (33, 35, 36) montée sur l'axe de la roulette supérieure de renvoi (15) et solidaire en rotation avec ladite roulette (15).

11. Dispositif de changement de vitesses selon les revendications 8 et 10, caractérisé en ce que l'ensemble mobile de déraillement (7) est disposé de façon coulissante latéralement sur l'ensemble supérieur de retenue (6) selon un axe (XX') concourant avec le plan de symétrie générale (P) du cycle.

12. Dispositif de changement de vitesses selon la revendication 11, caractérisé en ce que la tige de commande (23) mobile latéralement avec la rotation du chemin de guidage (31) est disposée de façon coulissante à l'intérieur d'un boîtier principal (14) coulissant dans un trou (19) de l'ensemble supérieur de retenue (6) orienté selon ledit axe (XX').

13. Dispositif de changement de vitesses selon la revendication 12, caractérisé en ce que la tige de commande (23) comprend une succession de dents de commande de montée des vitesses (25) et une succession de dents de commande de descente de vitesses (24).

14. Dispositif de changement de vitesses selon la revendication 13, caractérisé en ce que les moyens de commande comprennent deux dispositifs de commande : un premier dispositif de commande de montée des vitesses (13) et un deuxième dispositif de descente des vitesses (12), chaque dispositif comprenant un électroaimant (48) alimenté lors de la fermeture de respectivement l'un des interrupteurs de commande de montée des vitesses (50m) ou de l'un des interrupteurs de commande de descente des vitesses (50d).

15. Dispositif de changement de vitesses selon l'une quelconque des revendications 10 à 14, caractérisé en ce que les moyens d'indexation (MI) sont constitués par une succession de creux d'indexation (40a, 40b, 40c, 40d, 40e, 40f, 40g, 40h) réalisés sur le boîtier principal (14) de l'ensemble mobile de déraillement, destinés à coopérer avec une bille (41) solidaire de l'ensemble supérieur de retenue (6) et sollicitée en position d'indexation par un ressort de compression (42).

16. Dispositif de changement de vitesses selon la revendication 15, caractérisé en ce que l'axe (XX') de coulissement latéral de l'ensemble mobile de déraillement (7) est incliné vers le bas pour former avec le plan (P) de symétrie générale, un angle (α) aigu compris entre 90° et 40°.

17. Dispositif de changement de vitesses selon la revendication 16, caractérisé en ce que la tige de commande (23) comprend un brin principal (230) dont l'extrémité inférieure est prolongée par un brin secondaire (231) portant l'axe de transmission, ledit brin principal (230) portant latéralement les deux successions de dents (24, 25) et ayant un axe général (mm') concourant avec l'axe (nn') du brin secondaire (231, l'axe (mm') formant avec l'axe (nn') un angle sensiblement égal à l'angle (α).

18. Dispositif de changement de vitesses selon la revendication 16, caractérisé en ce que la tige de commande (23) comprend un brin principal (235) comprenant les deux successions de dents (24, 25) et qui est guidé en translation selon son axe, dans le logement de coulissement (22) du boîtier principal (14) par ses deux extrémités (236, 237), et en ce que l'axe de transmission (27) est solidaire de l'extrémité d'un bras intermédiaire mobile (238) dont l'autre extrémité est articulée sur l'extrémité inférieure (236) du brin principal (235) autour d'un axe (239).

19. Dispositif de changement de vitesses selon la revendication 2, où ledit dispositif est un dérailleur avant prévu pour être associé à un groupe de plateaux coaxiaux (101, 102), caractérisé par le fait que le chemin de guidage (310) est porté par un disque (106) solidarisé à l'un des plateaux, et que le doigt de commande (46) est porté par l'ensemble mobile de déraillement (700).

## Claims

1. Gear shifting device for a cycle provided to cooperate with a transmission assembly comprising an endless chain (5)and a group of plates (101, 102) or pinions (4a, 4b, 4c, 4d, 4e, 4f, 4g, 4h) coaxially assembled, comprising a mobile gear shift assembly (7, 700) provided to laterally displace the chain from one plate or pinion to another and means for controlling the displacement of the mobile gear shift assembly, characterized in that the device comprises transformation means affixed rotationally to a rotating element (15, 106, 160), provided to be rotationally driven by the chain, and at least one control finger (46) movable between a retracted resting position and a projecting position in which the control finger cooperates with the transformation means, such cooperation transforming the rotation of the rotating element into a lateral displacement of the mobile gear shift assembly.

2. Device according to claim 1, characterized in that the transformation means comprise a guide path (31, 310) comprising an upshifting ramp (32) and a downshifting ramp (34).

3. Device according to claim 1, characterized in that the transformation means comprise a toothed shaft (23) movable transversely with respect to the rotation or the rotating element (15).

4. Gear shifting device according to claim 1, characterized in that the control finger (46) is biased to a projecting position by an electromagnet (48).

5. Gear shifting device according to claim 1, characterized in that the control finger (46) is biased to a retracted resting position by a compression spring.

6. Gear shifting device according to claim 5, characterized in that the control means comprise a metallic plunger (460) independent of the control finger (46) which is made of a non-magnetic material.

7. Gear shifting device according to claim 6, characterized in that the control means comprise an electrical power circuit constituted by a battery (49) and at least one interrupter controlling upshifting (50m) and/or controlling downshifting (50d).

8. Gear shifting device according to claim 1, characterized in that it is connected to the frame (3) of the cycle and comprises an upper retention assembly (6, 600) on which the mobile gear shift assembly (7, 700) is movably mounted.

9. Gear shifting device according to claim 8, characterized in that it comprises indexing means (MI, 11, 41, 42, 40 114, 115) for defining the position of the mobile gear shift assembly (7, 700), said indexing means being partially affixed to the upper retention assembly (6, 600) and partially affixed to the mobile gear shift assembly (7, 700).

10. Gear shifting device according to any of the preceding claims, where said device is a rear gear shift comprising a mobile gear shift assembly (7) which has an upper return wheel (15) and a lower return wheel (18) pivoting at the lower portion of a connection arm (17), characterized in that the guide path (31) is formed by at least one ring (33, 35, 36) mounted on the axis of the upper return wheel (15) and rotationally affixed to said wheel (15).

11. Gear shifting device according to claims 8 and 10, characterized in that the mobile gear shift assembly (7) is arranged slidably laterally on the upper retention assembly (6) along an axis (XX') concurrent with the general plane of symmetry (P) of the cycle.

12. Gear shifting device according to claim 11, characterized in that the control shaft (23) movable laterally with the rotation of the guide path (31), is slidably arranged inside a main casing (14) sliding in a hole (19) of the upper retention assembly (6) oriented along said axis (XX').

13. Gear shifting device according to claim 12, characterized in that the control shaft (23) comprises a series of teeth for controlling upshifting (25) and a series of teeth for controlling downshifting (24).

14. Gear shifting device according to claim 13, characterized in that the control means comprise two control devices: a first control device for upshifting (13) and a second device for downshifting (12), each device comprising an electromagnet (48) powered during closure, respectively, of one of the interrupters controlling upshifting (50m) or one of the interrupters controlling downshifting (50d).

15. Gear shifting device according to any of claims 10-14, characterized in that the indexing means (MI) are constituted by a series of indexing recesses (40a, 40b, 40c, 40d, 40e, 40f, 40g, 40h) obtained on the main casing (14) of the mobile gear shift assembly, and adapted to cooperate with a ball (41) affixed to the upper retention assembly (6) and biased to an indexing position by a compression spring (42).

16. Gear shifting device according to claim 15, characterized in that the axis (XX') for the lateral sliding of the mobile gear shift assembly (7) is inclined downwardly to form with the general plane of symmetry (P), an acute angle (α) comprised between 90° and 40°.

17. Gear shifting device according to claim 16, characterized in that the control shaft (23) comprises a main side (230) whose lower end is extended by a secondary side (231) bearing the transmission axis, said main side (230) laterally bearing the two series of teeth (24, 25) and having a general axis (mm') concurrent with the axis (nn') of the secondary side (231), the axis (mm') forming with the axis (nn') an angle substantially equal to angle (α).

18. Gear shifting device according to claim 16, characterized in that the control shaft (23) comprises a main side (235) comprising the two series of teeth (24, 25), and which is translationally guided along its axis, in the sliding housing (22) of the main casing (14) by its two ends (236, 237), and in that the transmission axis (27) is affixed to the end of a mobile intermediate arm (238) whose other end is journalled on the lower end (236) of the main side (235) about an axis (239).

19. Gear shifting device according to claim 2, where said device is a front gear shift provided to be associated with a group of coaxial plates (101, 102), characterized in that the guide path (310) is carried by a disc (106) affixed to one of the plates, and that the control finger (46) is carried by the mobile gear shift assembly (700.)

## Patentansprüche

1. Gangschaltungsvorrichtung für ein Fahrrad, die dazu vorgesehen ist, mit einer Übersetzungseinheit zusammenzuwirken, die eine endlose Kette (5) und eine Gruppe von Scheiben (101, 102) oder von Ritzeln (4a, 4b, 4c, 4d, 4e, 4f, 4g, 4h) aufweist, die auf koaxiale Weise zusammengefügt sind, und die eine bewegliche Kettenumlegeeinheit (7, 700) aufweist, die dazu vorgesehen ist, die Kette seitlich von einer Scheibe oder einem Ritzel auf eine andere oder ein anderes zu verschieben, und Einrichtungen zum Steuern der Verschiebung der beweglichen Kettenumlegeeinheit, dadurch gekennzeichnet, daß
die Vorrichtung Umwandlungseinrichtungen, die bei Rotation fest mit einem Drehelement (15, 106, 160) verbunden sind, das dazu vorgesehen ist, in Rotation durch die Kette mitgenommen zu werden, und zumindest einen Steuerfinger (46) aufweist, der zwischen einer zurückgezogenen Ruheposition und einer vorstehenden Position beweglich ist, in der der Steuerfinger mit den Umwandlungseinrichtungen zusammenwirkt, wobei dieses Zusammenwirken die Rotation des Drehelementes in eine seitliche Verschiebung der beweglichen Kettenumlegeeinheit umwandelt.

2. Vorrichtung gemäß Anspruch 1, dadurch gekennzeichnet, daß die Umwandlungseinrichtungen einen Führungsweg (31, 310) aufweisen, der eine Rampe zum Hochschalten der Gänge (32) und eine Rampe zum Runterschalten der Gänge (34) aufweist.

3. Vorrichtung gemäß Anspruch 1, dadurch gekennzeichnet, daß die Umwandlungseinrichtungen eine gezahnte Stange (23) aufweisen, die transversal im Zusammenhang mit der Rotation des Drehelementes (15) beweglich ist.

4. Gangschaltungsvorrichtung gemäß Anspruch 1, dadurch gekennzeichnet, daß der Steuerfinger (46) in der vorstehenden Position durch einen Elektromagneten (48) angezogen ist.

5. Gangschaltungsvorrichtung gemäß Anspruch 1, dadurch gekennzeichnet, daß der Steuerfinger (46) in zurückgezogener Ruheposition durch eine Druckfeder beansprucht ist.

6. Gangschaltungsvorrichtung gemäß Anspruch 5, dadurch gekennzeichnet, daß die Steuereinrichtungen einen metallischen Tauchkolben (460) aufweisen, der unabhängig von dem Steuerfinger (46) ist, der aus einem nichtmagnetischen Material ist.

7. Gangschaltungsvorrichtung gemäß Anspruch 6, dadurch gekennzeichnet, daß die Steuereinrichtungen eine Schaltung zur Zufuhr elektrischer Energie aufweisen, die durch eine Batterie (49) und zumindest einen Schalter zum Steuern des Hochschaltens der Gänge (50m) und/oder zum Steuern des Runterschaltens der Gänge (50d) gebildet ist.

8. Gangschaltungsvorrichtung gemäß Anspruch 1, dadurch gekennzeichnet, daß sie mit dem Rahmen (3) des Rades verbunden ist und eine obere Halteeinheit (6, 600) aufweist, auf der auf bewegliche Weise die bewegliche Kettenumlegeeinheit (7, 700) montiert ist.

9. Gangschaltungsvorrichtung gemäß Anspruch 8, dadurch gekennzeichnet daß sie Indexierungseinrichtungen (MI, 11, 41, 42, 40, 114, 115) aufweist, um die Position der beweglichen Kettenumlegeeinheit (7, 700) zu definieren, wobei die Indexierungseinrichtungen teilweise fest mit der oberen Halteeinheit (6, 600) und teilweise fest mit der beweglichen Kettenumlegeeinheit (7, 700) verbunden sind.

10. Gangschaltungsvorrichtung gemäß irgendeinem der vorangehenden Ansprüche, wobei die Vorrichtung eine hintere Kettenschaltungsvorrichtung ist, die eine bewegliche Kettenumlegeeinheit (7) aufweist, die eine obere Umlenkrolle (15) und eine untere Umlenkrolle (18) aufweist, die am unteren Teil eines Verbindungsarmes (17) schwenkbar ist,
dadurch gekennzeichnet, daß
der Führungsweg (31) durch zumindest einen Ring (33, 35, 36) gebildet ist, der auf die Achse der oberen Umlenkrolle (15) montiert ist und bei Rotation fest mit der Rolle (15) verbunden ist.

11. Gangschaltungsvorrichtung gemäß den Ansprüchen 8 und 10, dadurch gekennzeichnet, daß die bewegliche Kettenumlegeeinheit (7) auf seitlich gleitende Weise auf der oberen Halteeinheit (6) gemäß einer Achse (XX') angeordnet ist, die einen gemeinsamen Punkt mit der allgemeinen Symmetrieebene (P) des Rades hat.

12. Gangschaltungsvorrichtung gemäß Anspruch 11, dadurch gekennzeichnet. daß die Steuerstange (23), die seitlich mit der Rotation des Führungsweges (31) beweglich ist, auf gleitende Weise im Inneren eines Hauptgehäuses (14) angeordnet ist, das in einem Loch (19) der oberen Halteeinheit (6) gleitet, das gemäß der Achse (XX') ausgerichtet ist.

13. Gangschaltungsvorrichtung gemäß Anspruch 12, dadurch gekennzeichnet, daß die Steuerstange (23) eine Folge von Zähnen zum Steuern des Hochschaltens der Gänge (25) und eine Folge von Zähnen zum Steuern des Runterschaltens der Gänge (24) aufweist.

14. Gangschaltungsvorrichtung gemäß Anspruch 13, dadurch gekennzeichnet, daß die Steuereinrichtungen zwei Steuervorrichtungen aufweisen: eine erste Vorrichtung zum Steuern des Hochschaltens der Gänge (13) und eine zweite Vorrichtung zum Runterschalten der Gänge (12), wobei jede Vorrichtung einen Elektromagneten (48) aufweist, der beim Schließen von jeweils einem der Schalter zum Steuern des Hochschaltens der Gänge (50m) oder einem der Schalter zum Steuern des Runterschaltens der Gänge (50d) mit Energie versorgt wird.

15. Gangschaltungsvorrichtung gemäß irgendeinem der Ansprüche 10 bis 14, dadurch gekennzeichnet, daß die Indexierungseinrichtungen (PI) durch eine Folge von Indexierungsvertiefungen (40a, 40b, 40c, 40d, 40e, 40f, 40h) gebildet sind, die auf dem Hauptgehäuse (14) der beweglichen Kettenumlegeeinheit realisiert sind und die dazu bestimmt sind, mit einer Kugel (41) zusammenzuwirken, die fest mit der oberen Halteeinheit (6) verbunden ist und in eine Indexierungsposition durch eine Kompressionsfeder (42) gedrückt ist.

16. Gangschaltungsvorrichtung gemäß Anspruch 15, dadurch gekennzeichnet, daß die Achse (XX') des seitlichen Gleitens der beweglichen Kettenumlegeeinheit (7) in Richtung nach unten geneigt ist, und mit der allgemeinen Symmetrieebene (P) einen spitzen Winkel (α) zu bilden, der zwischen 90° und 40° beträgt.

17. Gangschaltungsvorrichtung gemäß Anspruch 16, dadurch gekennzeichnet, daß die Steuerstange (23) ein Hauptstück (230) aufweist, dessen unteres Ende durch ein zweites Stück (231) verlängert ist, das die Übertragungsachse trägt, wobei das Hauptstück (230) seitlich die beiden Zahnfolgen (24, 25) trägt und eine allgemeine Achse (mm') hat, die einen gemeinsamen Punkt mit der Achse (nn') des zweiten Stückes (231) aufweist, wobei die Achse (mm') mit der Achse (nn') einen Winkel bildet, der im wesentlichen gleich dem Winkel (α) ist

18. Gangschaltungsvorrichtung gemäß Anspruch 16, dadurch gekennzeichnet, daß die Steuerstange (23) ein Hauptstück (235) aufweist, das die beiden Zahnfolgen (24, 25) aufweist und das für eine Translationsbewegung gemäß seiner Achse in einer Gleitaufnahme (22) des Hauptgehäuses (14) durch seine beiden Enden (236, 237) geführt ist, und dadurch, daß die Übertragungsachse (27) fest mit dem Ende eines beweglichen Zwischenarmes (238) verbunden ist, dessen anderes Ende auf dem unteren Ende (236) des Hauptstückes (235) um eine Achse (239) angelenkt ist.

19. Gangschaltungsvorrichtung gemäß Anspruch 2, bei der die Vorrichtung eine vordere Kettenschaltungsvorrichtung ist, die dazu vorgesehen ist, einer Gruppe von koaxialen Scheiben (101, 102) zugeordnet zu sein, dadurch gekennzeichnet, daß der Führungsweg (310) durch eine Scheibe (106) getragen ist, die mit einer der Scheiben fest verbunden ist, und daß der Steuerfinger (46) durch die bewegliche Kettenumlegeeinheit (700) getragen ist.
